# EUROPEAN PATENT SPECIFICATION

(11) **EP 2 177 738 B1**
(45) Date of publication and mention of the grant of the patent: **25.05.2011**
(21) Application number: 09172744.6
(22) Date of filing: 12.10.2009
(51) Int. Cl.: F02D 13/02, F01L 1/344, F01L 13/00

(54) **Electrohydraulic device for the phase and lifting variation of the valves in an internal combustion engine**
Elektrohydraulische Vorrichtung zur Änderung der Phase und der Anhebung von Ventilen in Verbrennungsmotoren
Dispositif électrohydraulique pour la variation de phase et de levée des soupapes dans un moteur à combustion interne

(30) Priority: 16.10.2008 IT MI20081845
(43) Date of publication of application: 21.04.2010
(73) Proprietor: PIAGGIO & C. S.p.A., 56025 Pontedera (Pisa) (IT)
(72) Inventor: Nesti, Paolo, 56010 Ghezzano (Pisa) (IT)
(74) Representative: Coletti, Raimondo

(56) References cited:
- WO-A-91/07574
- WO-A-99/23362
- WO-A-02/079615
- FR-A- 2 644 543
- GB-A- 2 190 140

## Description

The present invention refers to an automatic electrohydraulic device for the phase and lifting variation of the valves in an internal combustion engine, able to be applied in particular to motor vehicles provided with engines in which the valves are controlled by the camshaft by means of rocker arms. Variable phasing systems of the distribution on four-stroke internal combustion engines are made for the purpose of increasing performance, reducing polluting emissions, in particular of unburned hydrocarbons, and improving the regularity of the engine at low operating speeds with low loads and just idling.

The variator device modifies the phasing between the drive shaft and the camshaft that actuates the valves. Its task is to vary the movement of the valves according to the power delivered and the number of revolutions and it is used to gain more effective control of polluting emissions, in particular when high performance is required, and to achieve better regularity of operation when the engine is idling or when the throttle valves are only a little open. In the latter situation, the pressure of the exhaust gases is greater than that inside the combustion chamber, and therefore the brunt gases enter into the intake pipes, polluting the air-petrol mixture, with the result of making the operation of the engine itself more irregular. Without the variator, in an engine with sports phasing, with low loads and at the minimum rotation speed, up to 40% of the chamber would be occupied by burnt gases instead of the fresh air-petrol mixture.

Phase varying devices, in particular electronically controlled ones, allow the requirements of the engine to be satisfied in an optimal manner at all rotation speeds, without having to make penalising compromises. Indeed, the variator influences the crossover angle of the valves, which corresponds to the rotation range of the drive shaft during which both the intake valves and the exhaust valves stay open simultaneously. The crossover is caused by the delayed closing of the exhaust and the early opening of the intake. This occurs when the piston is located at the Top Dead centre, at the start of the intake phase and at the end of the exhaust phase. In some cases, particularly at high revs, a small crossover angle would reduce the duration of the intake phase of the fresh mixture and the discharge phase of the burnt gases, preventing the cylinders from filling optimally, with the result that the power delivered by the engine would be less than what can normally be obtained. Indeed, with high loads (open throttle), opening the intake valves early, i.e. having a large value of the crossover angle, allows the filling of the cylinders to be improved, thus obtaining greater torque with a substantial gain at all operating speeds. On the other hand, an excessive crossover can cause irregular operation of the engine at low revs and with low loads, particularly at the minimum, with backfiring, wastage of unburned fuel that would come out from the exhaust valves and consequently an increase in polluting emissions, as well as the risk of deterioration of the catalyst.

Summarising, it can therefore be said that the phase variator, if managed correctly, offers the advantage of being able to make a low crossover angle when the engine operates at low operating speeds, to reduce the emissions of hydrocarbons and ensure that the engine has a good quality idle speed. In some cases this phasing with a small crossover angle is also used at very high operating speeds, using the advantage of the delayed closing to obtain the highest performance in this operating area of the engine. In the intermediate range of revs the position of the variator can also depend upon the amount that the throttle is open. The variable phasing distribution system described up to now, known as "first generation", is now widely used in high performance engines produced by most of the automobile industry.

The most evolved current variable phasing distribution systems, applied to so-called "second generation" automobile engines, foresee devices that optimise the performance characteristics of the engine, suitably modifying both the phasing and the lifting of the valves in the various operating points of the engine. With these possibilities, it is clearly easier to combine, in the same engine, very good performance characteristics with characteristics of good behaviour when idling and in the presence of partial loads, with the maximum advantages in terms of yield and reduction of polluting emissions.

Variable phasing system were devised and developed mainly with reference to automobile engines, which were the first to have to tackle the problems of anti-pollution standards, in particular on the American market since the 1980s.

In the field of two or three-wheeled motor vehicles the same problems surfaced roughly ten years later and the problem has been partially dealt with, by intervening mainly on the treatment of the exhaust gases in the exhaust pipe, with catalysts and secondary air and, more recently, with the adoption of injection units like those in the automobile industry or units deriving from them.

The purpose of the present invention is therefore to make an automatic electrohydraulic device for the phase and lifting variation of the valves in an internal combustion engine, particularly intended for use in a motor vehicle, which is lighter, more compact, cost-effective and easier to build and maintain compared to the solutions currently known in the automobile industry.

Another purpose of the invention is to make an automatic electrohydraulic device for the phase and lifting variation of the valves in an internal combustion engine that is able to meet the most restrictive anti-pollution standards in force in most industrialised countries, with particular reference to the motor vehicle category.

Yet another purpose of the invention is to make an automatic electrohydraulic device for the phase and lifting variation of the valves in an internal combustion engine that is compatible with the need to make engines, particularly for motorcycling, with increasingly high performance.

These purposes according to the present invention are accomplished by making an automatic electrohydraulic device for the phase and lifting variation of the valves in an internal combustion engine as outlined in claim 1.

Further characteristics of the invention are highlighted by the dependent claims, which are an integral part of the present description.

The characteristics and advantages of an automatic electrohydraulic device for the phase and lifting variation of the valves in an internal combustion engine of the present invention shall become clear from the following description, given as an example and not for limiting purposes, referring to the attached schematic drawings, in which:
- figure 1 is a section view of the complete head of an internal combustion engine provided with a first embodiment of an automatic electrohydraulic device for the phase and lifting variation of the valves according to the invention;
- figure 1A is a section view of the camshaft, obtained along the line D of figure 1;
- figure 2 is another section view of the complete head of an internal combustion engine provided with the device of figure 1;
- figure 2A is a section view of the camshaft, obtained along the line E of figure 2;
- figure 3 is a diagram that illustrates the graphs of the lifting of the valves according to the engine angle in an internal combustion engine provided with the device of figure 1;
- figure 4 is a further section view of a part of the internal combustion engine provided with the device of figure 1;
- figure 5 is a section view of the complete head of an internal combustion engine provided with a second embodiment of an automatic electrohydraulic device for the phase and lifting variation of the valves according to the invention;
- figure 5A is a section view of the camshaft, obtained along the line F of figure 5;
- figure 6 is another section view of the complete head of an internal combustion engine provided with the device of figure 5; and
- figure 6A is a section view of the camshaft, obtained along the line G of figure 6.

Firstly, it should be specified that all of the example embodiments of the devices illustrated in the figures, described in detail later on, can be applied to engines with one or more cylinders, as well as to heads provided either with two or four valves for each cylinder.

The attached figures show a section view of a complete head of an internal combustion engine 10, the distribution system of which is provided with an electronically managed electrohydraulic device for the lifting variation of the intake and exhaust valves, with the possibility of simultaneous variation of the phase of one or both of the cams even by different amounts. In order to obtain the lifting variation of the valves conical cams need to be used and there needs to be a rocker arm-cam coupling through a ball joint.

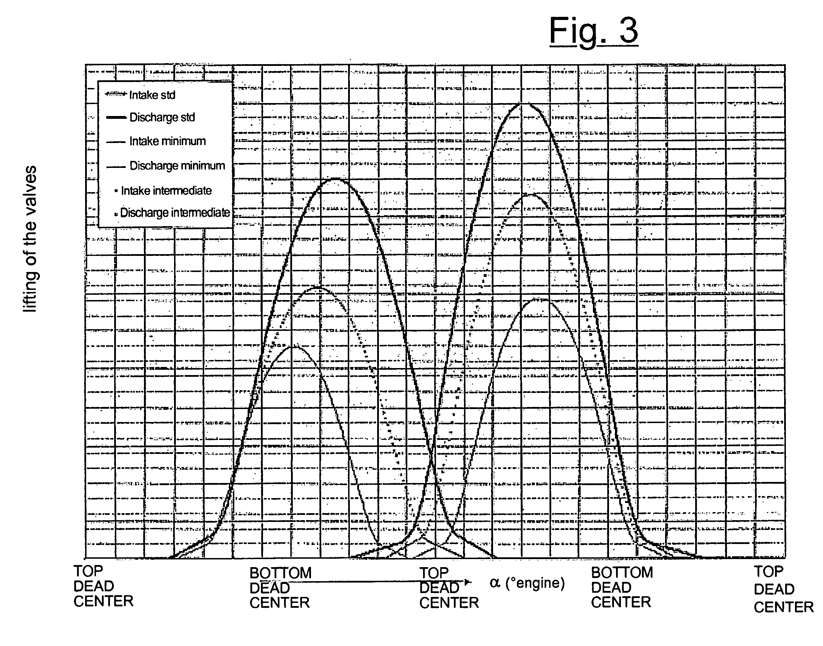

Figure 3 shows the graphs of the valve lifting according to the engine angle, with the possibility of lifting and phase variation of the intake and discharge valves, where the two curves with greater lifting represent a typical operating condition of a conventional engine, with crossover of the lifting near to the top dead centre. The two curves with lower lifting and without crossover, on the other hand, represent operating conditions with greatly partialised throttle or at minimum revs. Finally, the two intermediate curves represent one of the numerous possible transitional conditions between the two extreme curves.

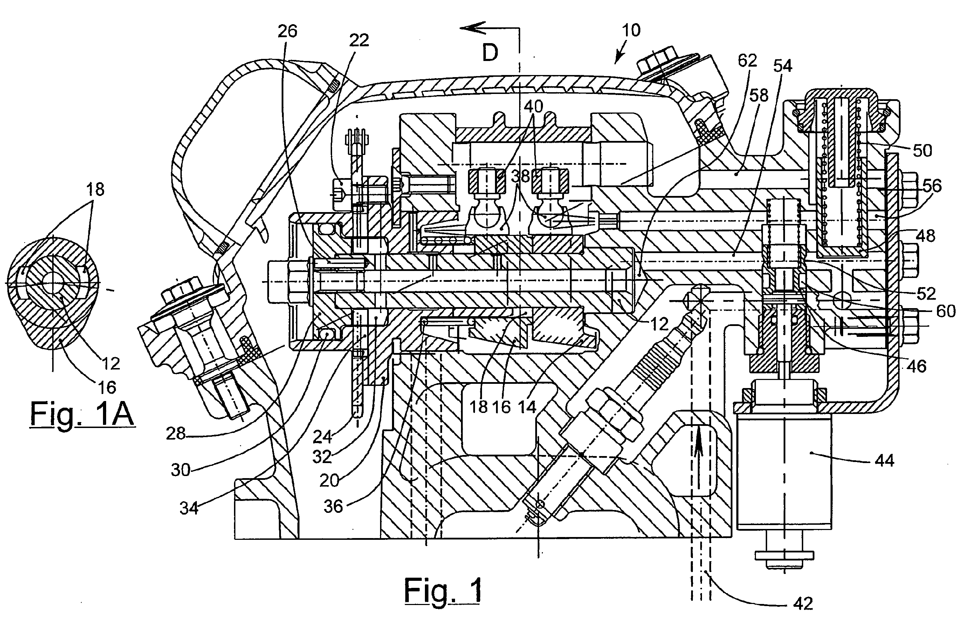

As shown in the example embodiment of figure 1, the engine 10 is provided with a camshaft consisting of two or more elements, where a first central element 12 keeps the whole assembly aligned and guided. At one of the ends of the first element 12 of the camshaft the support housed on the head of the engine 10 is obtained. The camshaft thus comprises at least one conical intake cam 14, integral or attached with stable coupling on the first element 12 of the camshaft.

The other conical (exhaust) cam 16 is housed in such a way as to be free to rotate with respect to the first element 12 of the camshaft and it is angularly restrained, with some straight or helicoidal grooves 18 (according to whether or not it is wished to have variation of the phase of this cam 16), to a second element 20 of the camshaft. Such a second element 20 has the other support housed on the head of the engine 10 and has the timing ring gear 24, timely phased, fixed onto it, by means of the screws 22.

On the other end of the first element 12 of the camshaft at least one hydraulic piston 28 is fitted, timely phased by means of an adjusting screw 26 and complete with dynamic sealing gasket 30 and with one or more helicoidal grooves 32, for the phase variation of the cam 14, constrained to this first element 12 of the camshaft.

In the helicoidal grooves 32 that make the phase variation of the cams 14 and 16 some pins 34 act, which are integral with the second element 20 of the camshaft on which the timing ring gear 24 is fixed.

At the central part of the camshaft an elastic element 36 is housed, made in the form of a torsion spring that operates by compression, which keeps the two elements 12 and 20 of the camshaft preloaded in the position of clearance recovery and of maximum extension size of the camshaft itself, with the articulated tappet 38 (i.e. obtained through spherical articulations) integral with an end of the rocker arms 40 that work on the position of minimum lifting of the cams 14 and 16.

The hydraulic piston 28 is actuated, in the axial direction of the camshaft, by the pressure of the oil of the engine 10, which arrives from the engine block through a pipe 42 and that is normally channelled onto the head to lubricate and cool the moving members of the distribution. The path of the oil over the head has been suitably modified so as to ensure, in addition to the lubrication of the various members of the engine 10, also the actuation of the electrohydraulic device according to the invention.

Also housed on the head of the engine 10 are an electromagnet 44, which actuates a slide valve 46 for activating the hydraulic piston 28, and a mechanical group 48 for adjusting the oil pressure, calibrated by means of a spring 50 at a lower pressure than that present in the block of the engine, so as not to alter the characteristics of the lubrication system of the engine 10.

Figure 1 represents the variator device in rest conditions, i.e. when the electromagnet 44 is not excited. In such conditions, the distribution works with the minimum lifting of the two cams 14 and 16.

The pressurised oil, coming from the block of the engine 10, reaches the head through the pipe 42, where it meets the slide valve 46 that, through a first throat 52 that faces onto a duct 54, makes a calibrated passage that ensures just the lubrication of the supports of the camshaft and of the tappets 38, but not the feeding of the hydraulic piston 28 that would actuate the variator device.

The excess oil, arriving from the engine block, actuates the mechanical group 48 for adjusting the oil pressure, made up of a small cylinder provided with the relative contrast spring 50.

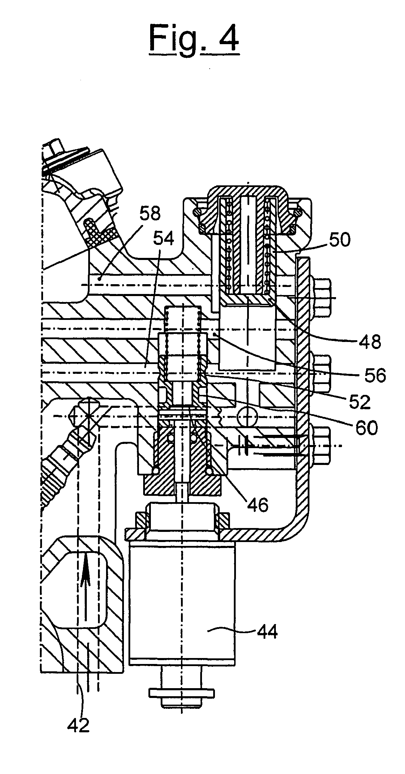

Figure 4 shows how the increasing oil pressure, as the revs of the engine 10 increase, pushes the small cylinder of the mechanical group 48 that, in its lifting stroke, firstly uncovers a hole 56 for the additional lubrication of the tappet 38 of the camshaft, with the spherical articulations arranged at the end of the rocker arms 40, and then uncovers another hole 58 for discharging the excess oil.

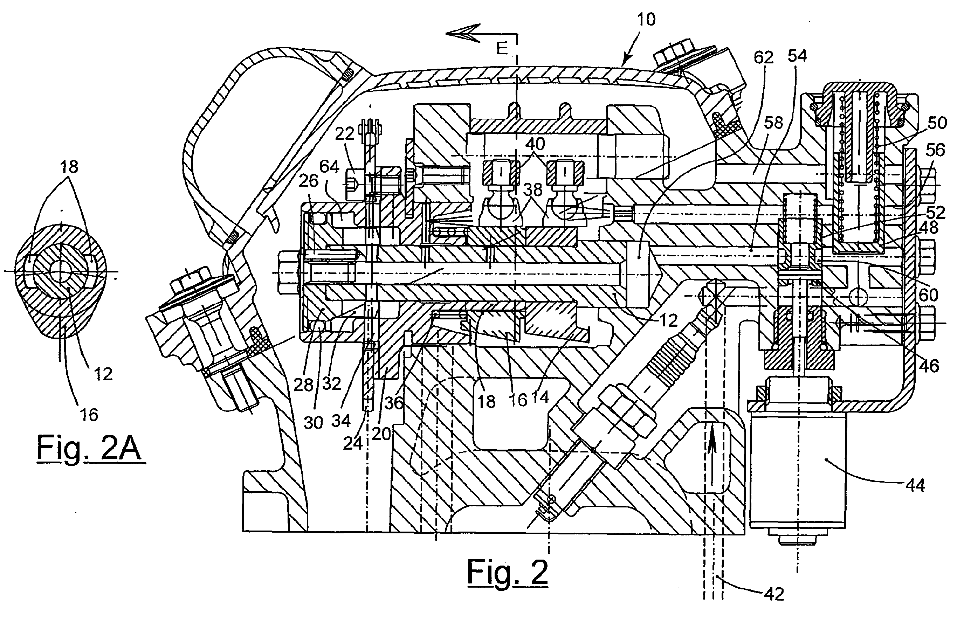

Figure 2 shows the variator device in the configuration of maximum lifting of the valves. When this condition is required, the electromagnet 44 is activated, which, overcoming the force of the contrast spring 50, pushes the slide valve 46 towards the limit switch and creates the free passage for the oil, with a second throat 60 of the slide valve 46 facing onto the duct 54 that simultaneously feeds the chambers 62 and 64 of the hydraulic piston 28 operatively connected to the camshaft. It can be seen that the first chamber 62 consists of the support of the camshaft, whereas the other chamber 64 is formed on the other end of the same camshaft, in other words at the head of the hydraulic piston 28.

The oil pressure applied inside the chambers 62 and 64 exceeds the preloading of the elastic element 36, causing the axial sliding of the entire group of the camshaft, with the cams 14 and 16 and the hydraulic piston 28 simultaneously going out of phase based on the characteristics of the helicoidal grooves 18 and 32 that control this movement.

A special feature of this embodiment of the device according to the invention is the fact that the actuation and management system can be of the electronic type, for example through the vehicle's electronic control unit, so as to be able to take maximum advantage of the advantages in all operating conditions of the engine 10. In particular, the operation of the device can be slaved, as well as to the rotation speed of the engine 10, also to the position of the throttle valve of the engine 10 itself. This makes it possible to obtain the two extreme phase and lifting conditions of the valve, shown in figure 3, in a wide usage range of the engine 10, with the use of a combination of lifting and phase that can promote regularity at the minimum and low loads and can decrease consumption and pollution, with big advantages also for the exhaust emission cycle, to go to greater crossover angles and valve lifting when the throttle is opened, so as to promote filling and consequently achieve a substantial torque gain of the engine 10.

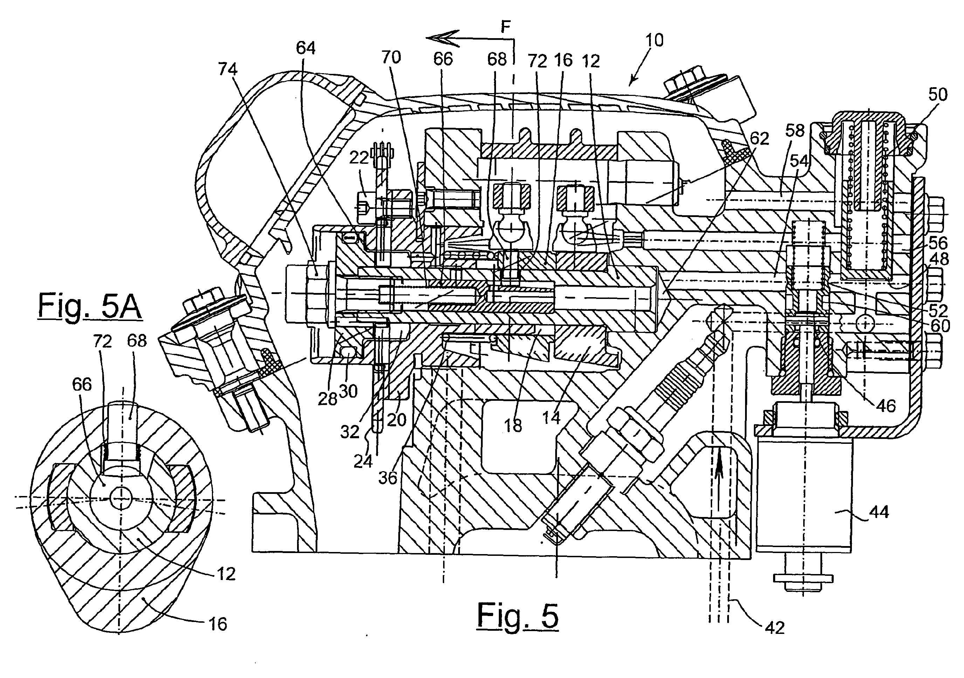

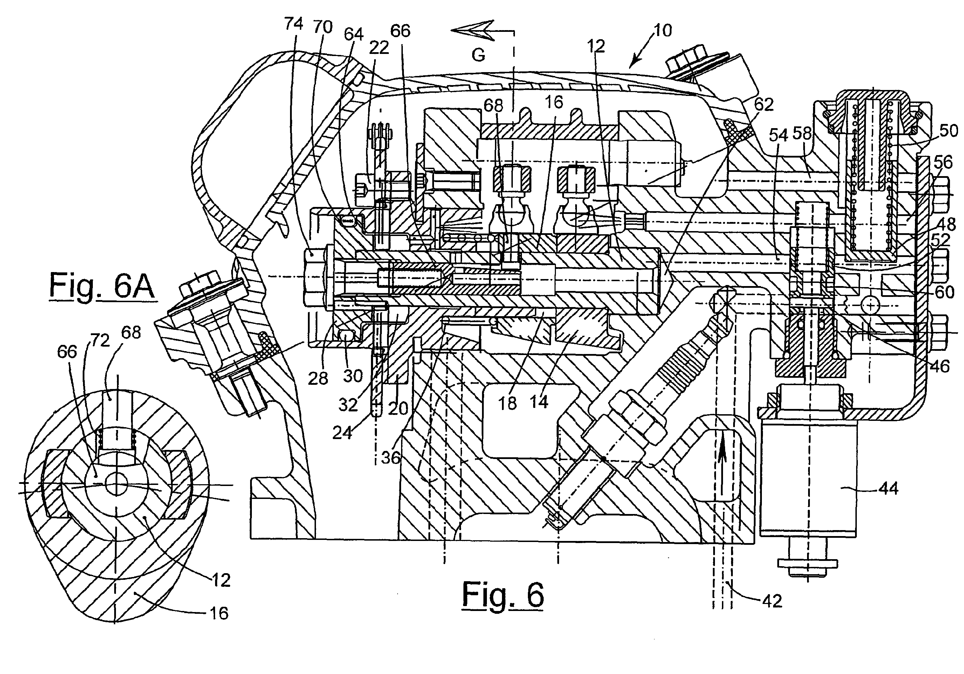

Figures 5 and 6 show the complete head of an internal combustion engine 10 provided with a second embodiment of the device according to the invention for the phase and lifting variation of the intake and exhaust valves, where a hydraulically actuated automatic decompressor is foreseen to facilitate the starting of the engine 10 itself.

The use of the automatic decompressor makes starting easier, obtaining a reduced compression pressure and therefore a lower resistant torque. This allows a lighter, more cost-effective and less bulky starter system to be used, which are not negligible advantages for engines with medium-high piston displacement intended for two or three-wheeled vehicles where cost-effectiveness, lightness and low bulk are leading features.

In short, an automatic decompressor, at ignition speed and in the compression phase of the engine, allows the exhaust valve to be opened, by a certain amount and with a well-defined phase and timing, to cause a pressure drop that achieves the advantages described above, with the combustion process in any case ensured by the residual pressure.

The application of a decompression device on a conventional engine is quite simple. More complications are encountered with engines with advance and lifting variation systems of the valves. However, it is still important to make it possible to apply it onto this last type of engine in order to be able to exploit the advantages described above.

In the present case, unlike the known solutions where the actuation is controlled by centrifugal masses, the decompression device needs to be integrated with the electrohydraulic device that allows the phase and lifting variation of the valves of the engine 10. Figure 5 shows a section view of the complete head of the engine 10, provided with a decompression device consisting of a small shaped piston 66 and a pin 68, represented in the rest state (engine stopped).

The small shaped piston 66 is housed inside the central element 12 of the camshaft, where it is free to slide axially and it is kept preloaded in limit switch position by a spring 70.

The pin 68 is a cylindrical element that actuates the rocker arm 40 of the exhaust valve, and is housed and guided in a timely phased hole formed in the radial direction on the base radius of the exhaust cam 16. A slotted hole is formed on the central element 12 of the camshaft that allows the free passage of the pin 68 and the freedom of angular movement when the phase variator device between the two cams 14 and 16 is actuated.

The two opposite ends of the pin 68 are spherical in shape. One of these ends rests, through the effect of a spring 72 (figures 5A and 6A), on an inclined cylindrical surface of the small piston 66. The other end, in rest and starting conditions of the engine 10, projects from the base radius of the cam 16 (as shown more clearly in the enlarged partial section view of figure 5A) and actuates the rocker arm 40.

As described earlier, figure 5 shows the decompressor in the condition with the engine 10 stopped and starting up. Indeed, the small piston 66 is in the limit switch position, pushed by the spring 70, and the pin 68 rests on the high point of the inclined plane, with the end projecting from the base radius of the cam 16. Such projection determines the contact with the rocker arm 40 and, consequently, the opening of the exhaust valve in the compression phase of the engine 10 for a well-defined time to achieve the desired end of compression pressure.

Figure 6 shows the behaviour of the decompressor with the engine 10 started. The decompressor is fed with pressurised oil, which arrives from the engine block at the head through the piping 42, is channelled into the duct 54 and then flows inside the central element 12 of the camshaft, where the oil pressure pushes the small piston 66 until it overcomes the force of the spring 70. Such a small piston 66 thus comes to rest against the other limit switch foreseen for this operating condition, formed at an end by a screw 74, allowing the pin 68 to go down below the base radius of the cam 16 and, consequently, allowing free passage of the rocker arm 40.

It has thus been seen that the automatic electrohydraulic device for the phase and lifting variation of the valves in an internal combustion engine according to the present invention, achieves the purposes outlined earlier.

The automatic electrohydraulic device for the phase and lifting variation of the valves in an internal combustion engine of the present invention thus conceived can in any case undergo numerous modifications and variants, all of which are covered by the inventive concept; moreover, all the details can be replaced by technically equivalent elements. In practice, the materials used, as well as the shapes and sizes, can be whatever according to the technical requirements.

The scope of protection of the invention is therefore defined by the attached claims.

## Claims

1. Device for the phase and lifting variation of the valves in an internal combustion engine (10) of the type comprising at least one valve control camshaft made up of a first element (12), operationally connected to at least one first cam (14), and of a second element (20), operationally connected to at least one second cam (16), said first element (12) and second element (20) of the camshaft being operationally connected to each other, **characterised in that** it comprises at least one hydraulic piston (28), integral with said first element (12) of the camshaft at one end thereof, actuated in the axial direction of the camshaft by the engine (10) oil pressure and provided with one or more helicoidal grooves (32), to realise the phase and/or lifting variation of at least one of said cams (14, 16) through the axial sliding of said first element (12) of the camshaft in relation to said second element (20) of the camshaft.

2. Device according to claim 1, **characterised in that** said second element (20) of the camshaft is provided with one or more pins (34) which engage in said helicoidal grooves (32) provided on said hydraulic piston (28).

3. Device according to claim 2, **characterised in that**, at the central part of the camshaft, at least one elastic member (36) is housed, which keeps said two elements (12, 20) of the camshaft pre-loaded in position of maximum extension dimension of the camshaft.

4. Device according to claim 2, **characterised in that** said elastic member (36) is made in the form of a torsional spring which operates by compression.

5. Device according to claim 3, **characterised in that** it comprises an electromagnet (44) which actuates a slide valve (46) for the activation of said hydraulic piston (28).

6. Device according to claim 5, further comprising a mechanical group (48) for the adjustment of the oil pressure, comprising a small cylinder provided with a corresponding contrast spring (50), said mechanical group (48) being calibrated by means of said spring (50) to a pressure lower than that present in the block of the engine (10).

7. Device according to claim 5 or 6, **characterised in that** said slide valve (46) is provided with a first throat (52) which faces a duct (54) to realise a calibrated passage which guarantees only the lubrication of the camshaft supports but not the oil supply to said hydraulic piston (28).

8. Device according to claim 7, **characterised in that** said slide valve (46) is provided with a second throat (60) which faces said duct (54) for supplying oil to one or more chambers (62, 64) of said hydraulic piston (28), the oil pressure exerted inside said chambers (62, 64) exceeding the pre-loading of said elastic member (36) and causing the axial sliding of the camshaft.

9. Device according to claim 1, **characterised in that** said second cam (16) is mounted so as to freely rotate in relation to said first element (12) of the camshaft and is angularly restrained, through one or more straight or helicoidal grooves (18), to said second element (20) of the camshaft.

10. Device according to claim 9, **characterised in that** the timing ring gear (24) of the engine (10) is fixed on said second element (20) of the camshaft by means of at least one fixing member (22).

11. Device according to any of claims from 1 to 10, **characterised in that** the tappet of each cam (14, 16) comprises a ball joint (38) integral with an end of the rocker arms (40) which work on the minimum lifting position of said cams (14, 16).

12. Device according to claim 11, **characterised in that** said cams (31, 32) are of conical type.

13. Device according to any one of the previous claims, **characterised in that** it comprises a hydraulic-actuation automatic decompressor device to ease the start of the engine (10).

14. Device according to claim 13, **characterised in that** said decompressor is made up of a small shaped piston (66), housed inside said first element (12) of the camshaft where it is free to slide axially and is kept pre-loaded in limit switch position by a spring (70), and by a pin (68), which actuates the rocker arm (40) of the engine's (10) exhaust valve and which is housed and guided in a hole made in radial direction on the base radius of the exhaust cam (16).

15. Device according to claim 14, **characterised in that** the two opposed ends of said pin (68) have a spherical shape, a first end resting, as a result of a spring (72), on an inclined and cylindrical surface of said small piston (66) and the other end projecting, under conditions of rest and start of the engine (10), from the base radius of said exhaust cam (16) to actuate said rocker arm (40) of the exhaust valve.

## Patentansprüche

1. Vorrichtung zur Veränderung der Phase und des Hubs der Ventile in einem Verbrennungsmotor (10) der Art mit zumindest einer Ventilsteuerungsnockenwelle, die aus einem ersten Bauteil (12), welches betriebsfähig mit wenigstens einem ersten Nocken (14) verbunden ist, und einem zweiten Bauteil (20) besteht, welches betriebsfähig mit wenigstens einem zweiten Nocken (16) verbunden ist, wobei das erste Bauteil (12) und das zweite Bauteil (20) der Nockenwelle betriebsfähig miteinander verbunden sind, **dadurch gekennzeichnet, dass** sie wenigstens einen Hydraulikkolben (28) aufweist, der integral mit dem ersten Bauteil (12) der Nockenwelle an einem Ende derselben ausgeführt ist, in der Axialrichtung der Nockenwelle vom Öldruck des Motors (10) betätigt wird und mit einer oder mehreren schraubenförmigen Nuten (32) versehen ist, um die Phasen- und/oder Hubveränderung wenigstens eines der Nocken (14, 16) mittels des axialen Gleitens des ersten Bauteils (12) der Nockenwelle bezüglich des zweiten Bauteils (20) der Nockenwelle durchzuführen.

2. Vorrichtung nach Anspruch 1,
**dadurch gekennzeichnet, dass** das zweite Bauteil (20) der Nockenwelle mit einem oder mehreren Stiften (34) versehen ist, die in die auf dem Hydraulikkolben (28) vorhandenen schraubenförmigen Nuten (32) eingreifen.

3. Vorrichtung nach Anspruch 2,
**dadurch gekennzeichnet, dass** am mittleren Teil der Nockenwelle wenigstens ein elastisches Teil (36) untergebracht ist, das die beiden Bauteile (12, 20) der Nockenwelle in eine Stellung maximaler Auszugsdimension der Nockenwelle vorgespannt hält.

4. Vorrichtung nach Anspruch 2,
**dadurch gekennzeichnet, dass** das elastische Teil (36) die Gestalt einer Torsionsfeder hat, die durch Komprimierung wirkt.

5. Vorrichtung nach Anspruch 3,
**dadurch gekennzeichnet, dass** sie einen Elektromagneten (44) umfasst, der ein Schieberventil (46) zur Aktivierung des Hydraulikkolbens (28) betätigt.

6. Vorrichtung nach Anspruch 5, ferner aufweisend eine mechanische Baugruppe (48) zum Einstellen des Öldrucks, mit einem kleinen Zylinder, der mit einer zugehörigen Gegenfeder (50) versehen ist, wobei die mechanische Baugruppe (48) mittels der Feder (50) auf einen Druck abgestimmt ist, der niedriger als der im Block des Motors (10) vorhanden ist.

7. Vorrichtung nach Anspruch 5 oder 6,
**dadurch gekennzeichnet, dass** das Schieberventil (46) mit einem ersten Hals (52) versehen ist, der einem Kanal (54) zugewandt ist, um einen abgestimmten Durchlass zu realisieren, der lediglich die Schmierung der Nockenwellenlager sicherstellt, nicht jedoch die Ölzufuhr zum Hydraulikkolben (28).

8. Vorrichtung nach Anspruch 7,
**dadurch gekennzeichnet, dass** das Schieberventil (46) mit einem zweiten Hals (60) versehen ist, der dem Kanal (54) zugewandt ist, um Öl einer oder mehreren Kammern (62, 64) des Hydraulikkolbens (28) zuzuführen, wobei der innerhalb der Kammern (62, 64) ausgeübte Öldruck die Vorspannung des elastischen Teils (36) übersteigt und das axiale Gleiten der Nockenwelle bewirkt.

9. Vorrichtung nach Anspruch 1,
**dadurch gekennzeichnet, dass** der zweite Nocken (16) dazu angebracht ist, frei bezüglich des ersten Bauteils (12) der Nockenwelle zu drehen, und durch eine oder mehrere gerade oder schraubenförmige Nuten (18) an dem zweiten Bauteil (20) der Nockenwelle winkelmäßig eingeschränkt ist.

10. Vorrichtung nach Anspruch 9,
**dadurch gekennzeichnet, dass** der Nockenwellenantriebszahnkranz (24) des Motors (10) auf dem zweiten Bauteil (20) der Nockenwelle durch zumindest ein Fixierglied (22) befestigt ist.

11. Vorrichtung nach einem der Ansprüche 1 bis 10,
**dadurch gekennzeichnet, dass** der Mitnehmer jedes Nockens (14, 16) ein Kugelgelenk (38) aufweist, das integral mit einem Ende der Kipphebel (40) ausgeführt ist, die an der Stellung minimalen Hubs der Nocken (14, 16) arbeiten.

12. Vorrichtung nach Anspruch 11,
**dadurch gekennzeichnet, dass** die Nocken (31, 32) von konischer Art sind.

13. Vorrichtung nach einem der vorhergehenden Ansprüche,
**dadurch gekennzeichnet, dass** sie eine hydraulisch betätigte, automatische Dekompressionseinrichtung aufweist, um das Anlassen des Motors (10) zu erleichtern.

14. Vorrichtung nach Anspruch 13,
**dadurch gekennzeichnet, dass** die Dekompressionseinrichtung aus einem kleinen geformten Kolben (66), der innerhalb des ersten Bauteils (12) der Nockenwelle untergebracht ist, wo er axial frei gleiten kann und durch eine Feder (70) in eine Endlagenschalterstellung vorgespannt gehalten ist, und aus einem Stift (68) besteht, der den Kipphebel (40) des Auslassventils des Motors (10) betätigt und der in einem Loch untergebracht und geführt ist, welches am Grundkreisradius des Auslassnockens (16) in radialer Richtung ausgeführt ist.

15. Vorrichtung nach Anspruch 14,
**dadurch gekennzeichnet, dass** die zwei entgegengesetzten Enden des Stifts (68) eine kugelige Gestalt haben, wobei sich ein erstes Ende aufgrund einer Feder (72) auf einer geneigten und zylindrischen Oberfläche des kleinen Kolbens (66) abstützt und das andere Ende im Ruhezustand und Anlasszustand des Motors (10) von dem Grundkreisradius des Auslassnockens (16) hervorsteht, um den Kipphebel (40) des Auslassventils zu betätigen.

## Revendications

1. Dispositif pour faire varier la phase et la levée des soupapes d'un moteur à combustion interne (10) du type comprenant au moins un arbre à cames de commande de soupapes constitué d'un premier élément (12), connecté fonctionnellement à au moins une première came (14), et d'un second élément (20), connecté fonctionnellement à au moins une deuxième came (16), lesdits premier élément (12) et second élément (20) de l'arbre à cames étant connectés fonctionnellement l'un à l'autre, **caractérisé en ce qu'**il comprend au moins un piston hydraulique (28) solidaire dudit premier élément (12) de l'arbre à cames à une extrémité de celui-ci, actionné dans la direction axiale de l'arbre à cames par la pression d'huile du moteur (10) et pourvu d'une ou de plusieurs rainures hélicoïdales (32), pour réaliser la variation de phase et/ou de la levée d'au moins l'une desdites cames (14, 16) à travers le glissement axial dudit premier élément (12) de l'arbre à came relativement audit second élément (20) de l'arbre à cames.

2. Dispositif selon la revendication 1, **caractérisé en ce que** ledit second élément (20) de l'arbre à cames est pourvu d'un ou de plusieurs axes (34) qui s'engagent dans lesdites rainures hélicoïdales (32) prévues sur ledit piston hydraulique (28).

3. Dispositif selon la revendication 2, **caractérisé en ce que**, dans la partie centrale de l'arbre à cames, au moins un organe élastique (36) est logé, qui maintient lesdits deux éléments (12, 20) de l'arbre à cames précontraints en position de dimension d'extension maximale de l'arbre à cames.

4. Dispositif selon la revendication 2, **caractérisé en ce que** ledit organe élastique (36) se présente sous la forme d'un ressort de torsion qui fonctionne par compression.

5. Dispositif selon la revendication 3, **caractérisé en ce qu'**il comprend un électroaimant (44) qui actionne un tiroir (46) pour l'actionnement dudit piston hydraulique (28).

6. Dispositif selon la revendication 5, comprenant en outre un groupe mécanique (48) pour le réglage de la pression d'huile, comprenant un petit cylindre muni d'un ressort de contraste correspondant (50), ledit groupe mécanique (48) étant étalonné au moyen dudit ressort (50) à une pression inférieure à celle présente dans le bloc du moteur (10).

7. Dispositif selon la revendication 5 ou 6, **caractérisé en ce que** ledit tiroir (46) est pourvu d'une première gorge (52) située en face d'un conduit (54) pour réaliser un passage calibré qui garantit uniquement la lubrification des supports d'arbre à cames mais pas l'alimentation en huile dudit piston hydraulique (28).

8. Dispositif selon la revendication 7, **caractérisé en ce que** ledit tiroir (46) est pourvu d'une deuxième gorge (60) qui se trouve en face dudit conduit (54) pour fournir de l'huile à une ou plusieurs chambres (62, 64) dudit piston hydraulique (28), la pression exercée à l'intérieur desdites chambres (62, 64) dépassant la précontrainte dudit organe élastique (36) et provoquant le glissement axial de l'arbre à cames.

9. Dispositif selon la revendication 1, **caractérisé en ce que** ladite deuxième came (16) est montée de façon à tourner librement par rapport audit premier élément (12) de l'arbre à cames et est limité en rotation, par une ou plusieurs rainures droites ou hélicoïdales (18), au second élément (20) de l'arbre à cames.

10. Dispositif selon la revendication 9, **caractérisé en ce que** la couronne de commande de distribution (24) du moteur (10) est fixée sur ledit second élément (20) de l'arbre à cames au moyen d'au moins un élément de fixation (22).

11. Dispositif selon l'une quelconque des revendications 1 à 10, **caractérisé en ce que** le poussoir de chaque came (14, 16) comprend une articulation sphérique (38) solidaire d'une extrémité des culbuteurs (40) qui fonctionnent sur la position de levée minimum desdites cames (14, 16).

12. Dispositif selon la revendication 11, **caractérisé en ce que** lesdites cames (31, 32) sont de type conique.

13. Dispositif selon l'une quelconque des revendications précédentes, **caractérisé en ce qu'**il comprend un dispositif de décompression automatique à actionnement hydraulique pour faciliter le démarrage du moteur (10).

14. Dispositif selon la revendication 13, **caractérisé en ce que** ledit dispositif de décompression est constitué d'un petit piston façonné (66), logé à l'intérieur dudit premier élément (12) de l'arbre à cames où il est libre de glisser axialement et est maintenu en précontrainte en position de contact de fin de course par un ressort (70), et par un axe (68), qui actionne le culbuteur (40) de la soupape d'échappement du moteur (10) et qui est logé et guidé dans un trou formé dans la direction radiale sur le rayon de base de la came d'échappement (16).

15. Dispositif selon la revendication 14, **caractérisé en ce que** les deux extrémité opposées dudit axe (68) ont une forme sphérique, une première extrémité reposant, sous l'action d'un ressort (72), sur une surface inclinée et cylindrique dudit petit piston (66) et l'autre extrémité faisant saillie, dans les états de repos et de démarrage du moteur (10), depuis le rayon de base de ladite came d'échappement (16) pour actionner ledit culbuteur (40) de la soupape d'échappement.
